(19) Europäisches Patentamt
European Patent Office
Office européen des brevets

(11) **EP 2 781 990 A1**

(12) **EUROPEAN PATENT APPLICATION**

(43) Date of publication:
24.09.2014 Bulletin 2014/39

(51) Int Cl.:
**G06F 3/01** (2006.01)

(21) Application number: **14157939.1**

(22) Date of filing: **05.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.03.2013 JP 2013058551**

(71) Applicant: **FUJITSU LIMITED**
**Kawasaki-shi,**
**Kanagawa 211-8588 (JP)**

(72) Inventors:
• **Minagawa, Akihiro**
**Kawasaki-shi, Kanagawa 211-8588 (JP)**

• **Katsuyama, Yutaka**
**Kawasaki-shi, Kanagawa 211-8588 (JP)**
• **Takebe, Hiroaki**
**Kawasaki-shi, Kanagawa 211-8588 (JP)**
• **Hotta, Yoshinobu**
**Kawasaki-shi, Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(54) **Signal processing device and signal processing method**

(57)     A signal processing device includes: a repetition detection unit configured to detect a repetition of a feature value from a time series of the feature value corresponding to an input signal; and a recognition condition change unit configured to change a recognition condition for recognizing a class for the feature value when the repetition of the feature value is detected.

FIG. 3

**Description**

FIELD

The embodiment discussed herein is related to a signal processing device and a signal processing method.

BACKGROUND

Conventionally, a signal processing device recognizes specific classes of input (for example, an operation, a motion, a command, and so on) from input signals, and performs processing suitable for the recognized classes of input. The signal processing device also recognizes a specific operation on a touch panel, for example, and performs processing for assigning the recognized operation to a certain class of input.

The signal processing device learns in advance the conditions for signals that are to be recognized to be included in each class of input, and performs processing corresponding to the class of input if a signal that meets the learned signal conditions is input.

However, if the input signal is outside the conditions for signals that are to be recognized to be included in a specific class of input, the signal processing device does not recognize that the input signal is included in the class of input concerned. For example, a gesture (for example, waving a hand slowly, and so on) that is slightly slower than the conditions permit and therefore is not able to be recognized by the signal processing device will not be able to be recognized because the hand waving speed does not exceed a threshold, unless the learned signal conditions change.

For example, there is an approach in which a command is assigned to a new gesture when a new gesture is input a plurality of times (see Japanese Laid-open Patent Publication No. 2011-209773, for example).

SUMMARY

Accordingly, it is desirable to provide a technique to recognize a signal that has not been able to be recognized.

According to an embodiment of an aspect of the invention, a signal processing device includes: a repetition detection unit configured to detect a repetition of a feature value from a time series of the feature value corresponding to an input signal; and a recognition condition change unit configured to change a recognition condition for recognizing a class for the feature value when the repetition of the feature value is detected.

BRIEF DESCRIPTION OF DRAWINGS

FIG. 1 is a block diagram illustrating an example of a functional configuration of a signal processing device in this embodiment;
FIG. 2 is a block diagram illustrating an example of a hardware configuration with which signal processing may be implemented;
FIG. 3 is a flowchart illustrating an example of processing of the signal processing device in this embodiment;
FIG. 4 is a diagram illustrating an example of an input image in a frame t;
FIG. 5 is a diagram illustrating an example of a skin region on the HS plane;
FIG. 6 is a flowchart illustrating an example of a process of a feature value extraction unit;
FIG. 7 is an illustration for explaining motions of a hand and the change thereof;
FIG. 8A to FIG. 8D are graphs illustrating an example of detection of a candidate section performed by a section detection unit;
FIG. 9 is a flowchart illustrating an example of processing of a section detection unit;
FIG. 10A to FIG. 10C are graphs illustrating detection examples of candidate sections for sound;
FIG. 11 is a graph illustrating a specific example of candidate section detection;
FIG. 12 illustrates an explanation for a repetition detection unit;
FIG. 13 is a flowchart illustrating an example of processing of the repetition detection unit;
FIG. 14 is a graph illustrating a specific example of parameter changing; and
FIG. 15 is a graph illustrating the position coordinates and intervals of touches.

DESCRIPTION OF EMBODIMENT

Hereinafter, an embodiment will be described in detail with reference to the accompanying drawings.
While inventing the embodiment disclosed herein, observations were made regarding a related art. Such observations include the following, for example.

When an input signal is outside the range of signals representing a specific class of input, a signal processing device is not able to recognize the input signal as a signal in the specific class of input. In order to cause such a signal to be recognized as a signal in the specific class of input by the signal processing device, it is desirable to cause the signal processing device to learn what range of signals represents the specific class of input. Alternatively, it is desirable to perform processing for causing the signal processing device to learn processing corresponding to a new gesture that is input a plurality of times, separately from the existing class of input and the processing corresponding to the class of input.

Accordingly, the embodiment disclosed herein, for example, provides a technique to recognize a signal that has not been able to be recognized.

<Example of Functional Configuration of Signal Processing Device>

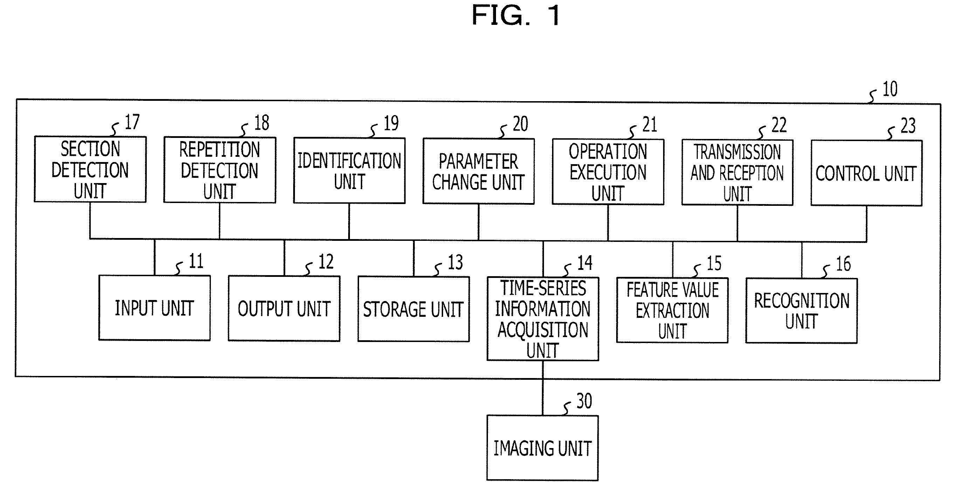

FIG. 1 is a block diagram illustrating an example of a functional configuration of a signal processing device in this embodiment. The signal processing device 10 illustrated in FIG. 1 includes an input unit 11, an output unit 12, a storage unit 13, a time-series information acquisition unit 14, a feature value extraction unit 15, a recognition unit 16, a section detection unit 17, a repetition detection unit 18, an identification unit 19, a parameter change unit (recognition condition change unit) 20, an operation execution unit 21, a transmission and reception unit 22, and a control unit 23.

The input unit 11 accepts various inputs, such as the start and completion of various instructions and inputs of settings, from the user who is using the signal processing device 10 and so on. In particular, the input unit 11 accepts instructions such as a time-series information acquisition instruction, a feature value extraction instruction, a section detection instruction, a repetition detection instruction, an identification instruction, a parameter change instruction, a recognition instruction, an operation execution instruction, and a transmission-and-reception instruction in this embodiment, for example.

The input unit 11 may be a keyboard, a mouse, or the like, for example, may be in the form of a touch panel using a screen, or the like, or may be a microphone, an imaging device, or the like, for example.

The output unit 12 outputs the contents input by the input unit 11, the contents executed based on the input contents, and so on. Note that the output unit 12 has a display unit such as a display or a monitor if outputting is performed using screen display, and has a sound output unit, for example, a speaker and so on if outputting is performed using sound. Additionally, the input unit 11 and the output unit 12 may be of an input-output integral type, such as a touch panel.

The storage unit 13 stores various kinds of information to be used in this embodiment. In particular, the storage unit 13 stores the time-series information, feature value extraction result, and so on of input signals obtained from, for example, the input unit 11 or an imaging unit 30 such as a camera that captures images of the actions of the user's hand, finger, and body, and the user's face. Additionally, the storage unit 13 stores parameters (recognition conditions) for specifying classes of input (for example, operation contents or the like) preset for feature values, section detection results, repetition detection results, results of identification through persons and so on, setting contents of parameters for specifying operation contents, and so on. Additionally, the storage unit 13 stores recognition results, results obtained by performing operations, results of transmission and reception, setting information for performing each processing with which signal processing in this embodiment may be implemented, user information for identifying a user, the execution processes and results of various kinds of processing. Note that information stored in the storage unit 13 is not limited to the information mentioned above.

Additionally, the storage unit 13 reads or writes various kinds of stored information at given timings if desired. Additionally, the storage unit 13 may function as a database that is systematically configured so that those information is allowed to be searched and extracted, for example, using keywords and so on. The storage unit 13 is a hard disk, a memory, or the like.

The time-series information acquisition unit 14 acquires various kinds of input information, such as the user's action or operation contents and the sound contents, on a time-series basis, for example. For example, the time-series information acquisition unit 14 may, but does not have to, acquire images in which actions of the user's hand, finger, body, and so on are captured, from the imaging unit 30 such as a camera. Note that, in order to identify, using the identifying unit 19, a user who is inputting an input signal, the time-series information acquisition unit 14 may acquire an image of the user's face from the imaging unit 30.

Additionally, the time-series information acquisition unit 14 acquires the contents of the user's operation input by the input unit 11, for example, on a time-series basis. For example, the time-series information acquisition unit 14 acquires audio signals obtained from a microphone, which is an example of the input unit 11, on a time-series basis. Additionally, the time-series information acquisition unit 14 may acquire detection signals obtained by using a finger, a touch pen, or the like from a touch panel and so on, which is an example of the input unit 11, on a time-series basis. The time-series information of input signals acquired by the time-series information acquisition unit 14 is stored in the storage unit 13.

The feature value extraction unit 15 acquires feature values of the user's actions, sounds, and so on from the time-series information of input signals obtained by the time-series information acquisition unit 14. For example, the feature value extraction unit 15 is capable of acquiring the feature value of a gesture action of the user's hand. In this case, the orientation, the moving direction, the speed, and the amount of repetitions (for example, the number of rotations, and so on) of the user's hand are extracted as feature values, for example. Note that the number of rotations is the number of times a hand is rotated when the action of drawing an arc with the hand is performed.

Additionally, the feature value extraction unit 15 extracts the feature used for recognition of the operation contents or the like from various kinds of input signals, for example. For example, in picture signals, the features (for example, the moment features) of the position coordinates and shape of a desired object on an image of a desired object are extracted as feature values. In sound signals, the amplitude information, cepstrum information (for example, mel-frequency cepstrum coefficients (MFCCs)) and so on are extracted as feature values. Additionally, in a touch operation, the position coordinates and moving speed of the detected touch on the time series, the pushing force on a touch panel, and so on are extracted as feature values. The feature values extracted by the feature value extraction unit 15 are not limited to these feature values, and combinations of a plurality of feature values mentioned above may be used. The extracted feature values are stored in the storage unit 13.

The feature value extraction unit 15 stores the feature values for input signals that serve as a target and that have been obtained in the previous frame, among pictures obtained from the imaging unit 30, in the storage unit 13.

Based on the feature value extracted by the feature value extraction unit 15 and the parameter (recognition condition) for identifying a class of input (for example, an operation content) preset for each given feature value stored in the storage unit 13, the recognition unit 16 identifies a class of input and recognizes the operation content or the like.

Recognition of an operation contents or the like is performed by determining whether the feature value extracted by the feature value extraction unit 15 is included in the range (parameter) of feature values that is preset for each operation content, for example. Then, if the feature value extracted by the feature value extraction unit 15 is included in the range of feature values, which is a parameter, the recognition unit 16 recognizes the feature value as an operation content corresponding to the parameter.

Note that if the recognition unit 16 is able to recognize an operation content or the like by comparing the extracted feature value with the recognition condition, the recognition unit 16 outputs the recognition result to the operation execution unit 21, and performs given processing.

If the recognition unit 16 is not able to recognize a specific class of input from the extracted feature value by a comparison with the recognition condition, the recognition unit 16 performs recognition of the operation content for the feature value extracted by the feature value extraction unit 15 using a recognition condition changed by a parameter change unit 20 described below. Note that the parameter may, but does not have to, be gradually changed until a certain recognition result is obtained or until recognition is performed a given number of times. Note that the recognition unit 16 may recognize an action content, as well as an operation content. In addition to changing the parameter for a single recognition condition, the recognition unit 16 may have a plurality of recognition conditions such as a "first recognition condition", which is a recognition condition provided before the parameter is changed, and a "second recognition condition", which is a recognition condition provided after the parameter is changed.

If the feature value obtained from the feature value extraction unit 15 is not recognized as some given operation content or the like in the recognition unit 16, the section detection unit 17 detects a given section where the feature value has a displacement larger than a preset threshold, as a candidate section. That is, when no change occurs in the time series of feature values, it may be determined that the user does not input anything, whereas when a change exceeding a threshold occurs in the time series of feature values, it may be determined that the section of the change is a section where although the user has performed some input operation, the input operation is not able to be recognized. Accordingly, the section detection unit 17 detects a section where displacement in the feature value is large.

Additionally, the section detection unit 17 detects a section where successive feature values each having a given amount of displacement are provided within given intervals. Note that the section detection unit 17 may perform the section detection mentioned above regardless of whether the feature value obtained from the feature value extraction unit 15 is recognized as some given operation content or the like in the recognition unit 16.

The repetition detection unit 18 detects whether a repeating action exists in a candidate section detected by the section detection unit 17. In particular, the repetition detection unit 18 extracts, among time series signals of feature values included in candidate sections, time series signals in each section where the feature value has a given amount of displacement, autocorrelates the time series signals in each section, and determines whether there is periodicity. That is, the repetition detection unit 18 detects that a repeating action has been performed, if a similarity equal to or higher than a preset threshold is found based on the similarity and so on that are found when a temporal shift is given with reference to the period of a feature value; however, the repetition detection unit 18 is not so limited.

Note that the repetition detection unit 18 may detect the number of repetitions when detecting a repeating action, and also may, but does not have to, detect the repetition, under the assumption that the action has been repeated, if a preset number or more of repetitions has occurred.

The identification unit 19 identifies a person who has entered time-series information. In particular, the identification unit 19 compares user identification information (a user ID and a password) input by the input unit 11 and so on and the user's face image obtained from the imaging unit 30 with preset user information, thereby identifying the user. Note that, for identification of a person from his or her face, the approach presented in Ying-Hao Wang, Yen-Te Shih, K.-C.Cheng, Chih-Jui Lin, and Tzuu-Hseng S.Li, "Real-time image processing of human face identification for home service robot," Proc. of IEEE/SICE Int. Symp. On System Integration, pp. 1171-1176. 2011. may be used by way of example but does not necessarily have to be used.

By performing processing in the identification unit 19, a parameter corresponding to the user identified by the identification unit 19 may be extracted from recognition conditions (parameters) for users (persons) stored in the storage unit 13 in advance. Accordingly, the parameter change unit 20 described below may change only the recognition conditions for a specific person.

For example, regarding typical gesture actions, there are some cases where the actions significantly differ from one user (person) to another. In such cases, the recognition conditions may be changed from one user to another. Accordingly, as illustrated in this embodiment, identification of the user makes it possible to appropriately perform recognition and so on of operation contents using recognition conditions stored in association with information on the identified person in the storage unit 13.

Note that, regarding the actions in the identification unit 19 described above, in the case of communication terminals, such as smartphones, owned by individuals, the communication terminals are highly likely to be used only by the owners and therefore do not have to have functions in the identification unit 19.

The parameter change unit 20 changes a parameter (recognition condition) so that an action content that has been detected by the section detection unit 17 and has not yet been recognized becomes recognized as a given operation content. In particular, the parameter change unit 20 changes the parameter (the first recognition condition) of each recognition condition preset for identifying a class of input from a feature value so that the repeating action detected in the repetition detection unit 18 is identified as any class of input. The changed parameter (the second recognition condition) is stored in the storage unit 13.

Note that the changing of a parameter includes, for example, but is not limited to, relaxing the value of a parameter or varying the time series of feature values corresponding to input signals.

Additionally, all the parameters for individual preset operation contents may be the targets of change, and parameters having time series of feature values whose similarities to the time series of repeating feature values are equal to or larger than a given threshold may also be the targets of change. Furthermore, only parameters specified in advance by the user and so on may be the targets of change. Additionally, in the above-mentioned similarity to the time series of repeating feature values, the similarity may be determined with reference to individual time series of repeating feature values, and the similarity may also be determined with reference to the average and so on of time series of repeating feature values.

The parameter change unit 20 may increase or decrease a feature value extracted by the feature value extraction unit 15 instead of changing a parameter (recognition condition). At this point, the recognition unit 16 recognizes the operation content from the feature value increased or decreased by the parameter change unit 20 and the fixed parameter (recognition condition).

Furthermore, the parameter change unit 20 may change the parameter (recognition condition) and increase or decrease the feature value extracted by the feature value extraction unit 15. At this point, the recognition unit 16 recognizes the operation content from the feature value increased or decreased by the parameter change unit 20 and the changed parameter (recognition condition).

Note that the feature value mentioned above may be increased or decreased by, but not limited to, adjusting the amplitude, frequency, and so on of the time series of repeating signals (feature values), amplifying them at a given magnification, and superimposing them on those of other signals.

Additionally, if the user is identified by the identification unit 19, the parameter change unit 20 changes the parameter set corresponding to the identified user.

In this embodiment, use of a parameter changed by the parameter change unit 20 may make it possible to recognize an operation that was not previously able to be recognized in recognition processing performed by the recognition unit 16.

Note that the parameter change unit 20 stores the content of a parameter before the change in the storage unit 13, and under the condition that a given period of time has elapsed, a given action has been completed, or an instruction from the user has been provided, the parameter change unit 20 performs processing (initialization processing) that restores the recognition condition used by the recognition unit 16 from the changed parameter (the second recognition condition) to the parameter before the change (the first recognition condition). This may inhibit similar feature values and recognition conditions from being excessively different from the original conditions, and thus may inhibit operation contents from being incorrectly recognized.

The operation execution unit 21 performs an operation based on a recognition result obtained by the recognition unit 16. Note that examples of the operation content include, but are not limited to, page turning and zooming in and out of a screen, printing, starting and stopping of given applications (for example, web browser, word processing software, spreadsheet software, e-mail software, and social networking services (SNSs)).

The transmission and reception unit 22 is a communication measure for transmitting and receiving various kinds of information to and from external devices through a communication network, for example, the Internet, a local area network (LAN), or the like. The transmission and reception unit 22 is capable of receiving various kinds of information already stored in an external device and so on, and is capable of transmitting the result of processing performed in the signal processing device 10 through a communication network and so on to an external device and so on.

The control unit 23 controls the entirety of components of the signal processing device 10. In particular, the control unit 23 performs each control of the signal processing, for example, based on an instruction or the like from the input unit 11 issued by the user and so on. Here, examples of each control include causing the time-series information acquisition unit 14 described above to acquire time-series information, causing the feature value extraction unit 15 to extract a feature value, causing the recognition unit 16 to recognize an operation content, causing the section detection unit 17 to detect a candidate section, and causing the identification unit 19 to identify a person. Examples of each control further include, but are not limited to, causing the parameter change unit 20 described above to update recognition conditions and causing the operation execution unit 21 to perform an operation.

Note that while the imaging unit 30 illustrated in FIG. 1 is provided outside the signal processing device 10, the imaging unit 30 is not limited to this and may be built in the signal processing device 10.

Examples of the signal processing device 10 described above include, but are not limited to, a personal computer (PC), a server, a communication terminal such as a smartphone or a tablet terminal, and a cellular phone. For example, the signal processing device 10 may be used in a game machine, a music reproduction system, an automotive navigation system, and so on.

According to this embodiment described above, without explicitly giving a learning phase, a repeating operation may be detected, a signal that has not yet been able to be recognized may be detected, and the signal may be recognized as a certain operation content.

<Hardware Configuration Example of Signal Processing Device 10>

In this embodiment, an execution program (signal processing program) capable of causing a computer to execute functions is installed, for example, in a general-purpose PC, and a communication terminal such as a smartphone, and so on, so that signal processing in this embodiment may be implemented. Here, a hardware configuration example of a computer (signal processing device 10) with which signal processing in this embodiment may be implemented will be described with reference to the drawing.

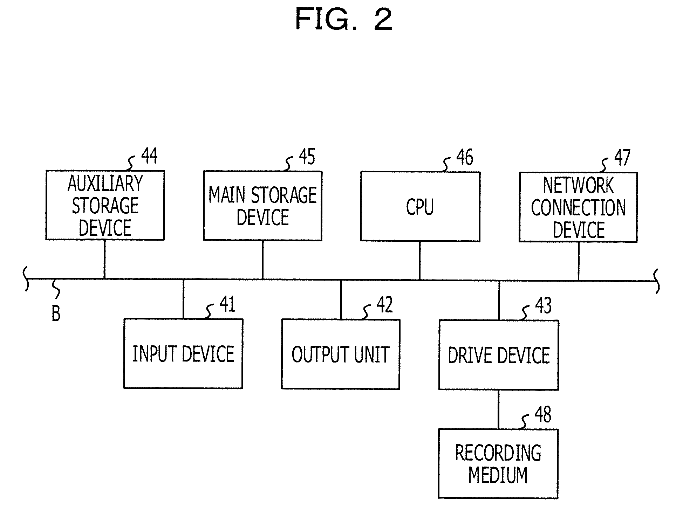

FIG. 2 is a block diagram illustrating an example of a hardware configuration with which signal processing may be implemented. The main body of a computer in FIG. 2 includes an input device 41, an output unit 42, a drive device 43, an auxiliary storage device 44, a main storage device 45, a central processing unit (CPU) 46 that performs various controls, and a network connection device 47, and these are connected to one another by a system bus B.

The input device 41 has pointing devices, such as a keyboard and a mouse, and sound input devices, such as a microphone operated by the user and so on, and accepts inputs, such as an instruction for execution of a program, various kinds of operation information, and information for activating software and so on.

The output unit 42 has a display that displays various kinds of windows, data and so on used for operating the main body of a computer for performing processing in this embodiment, and displays the execution process of a program, the result, and so on using a control program that the CPU 46 has.

Here, an execution program to be installed in the main body of the computer in this embodiment is provided, for example, by using a portable recording medium 48 such as a universal serial bus (USB) memory, a compact disk read-only memory (CD-ROM), or a digital video disc (DVD). The recording medium 48 on which the program is recorded may be set in the drive device 43. Based on a control signal from the CPU 46, the execution program on the recording medium 48 is installed from the recording medium 48 through the drive device 43 into the auxiliary storage device 44.

The auxiliary storage device 44 is, for example, a storage device, such as a hard disk drive or a solid state drive (SSD). Based on a control signal from the CPU 46, the auxiliary storage device 44 may store the execution program in this embodiment and the control program provided to the computer, and so on and may input and output the programs if desired. The auxiliary storage device 44 may read and write desired information from and to each piece of stored information based on a control signal from the CPU 46.

The main storage unit 45 stores the execution program and so on read from the auxiliary storage device 44 by the CPU 46. Note that the main storage unit 45 is a read only memory (ROM), a random access memory (RAM), or the like. Note that the auxiliary storage device 44 and the main storage unit 45 correspond to the storage unit 13 described above, for example.

Based on control programs of the operating system and so on and the execution program stored in main storage unit 45, the CPU 46 may control processing of the entire computer, such as various operations and input and output of data to and from each hardware component, thereby implementing each processing. Note that various kinds of information used during execution of programs may be acquired from the auxiliary storage device 44, and execution results and so on may also be stored in the auxiliary storage device 44.

In particular, based on an instruction for execution of a program obtained from the input device 41, for example, the CPU 46 causes a program installed in the auxiliary storage device 44 to be executed, thereby performing processing corresponding to the program on the main storage unit 45. For example, the CPU 46 executes a signal processing program, thereby performing processing such as the acquisition of time-series information performed by the time-series information acquisition unit 14, the extraction of a feature value performed by the feature value extraction unit 15, the recognition of an operation content performed by the recognition unit 16, and so on described above. Additionally, the CPU 46 performs processing such as the detection of a candidate section performed by the section detection unit 17, the detection of a repetition of an operation performed by the repetition detection unit 18, the identification of a person performed by the identification unit 19, the changing of the parameter performed by the parameter change unit 20, the execution of an operation performed by the operation execution unit 21, and so on. Note that the contents of processing performed by the CPU 46 are not limited to this. The contents of processing performed by the CPU 46 are stored in the auxiliary storage device 44 if desired.

Based on control signals from the CPU 46, the network connection device 47 connects with a communication network and so on so as to acquire an execution program, software, setting information and so on from an external device and so on connected to the communication network. Additionally, the network connection device 47 is capable of providing an execution result obtained by executing a program or the execution program itself in this embodiment to an external device and so on.

With a hardware configuration as described above, signal processing in this embodiment may be performed. Additionally, by installing a program, signal processing in this embodiment may be easily realized by a general-purpose PC, a communication terminal, and so on.

<Example of Processing of Signal Processing Device 10>

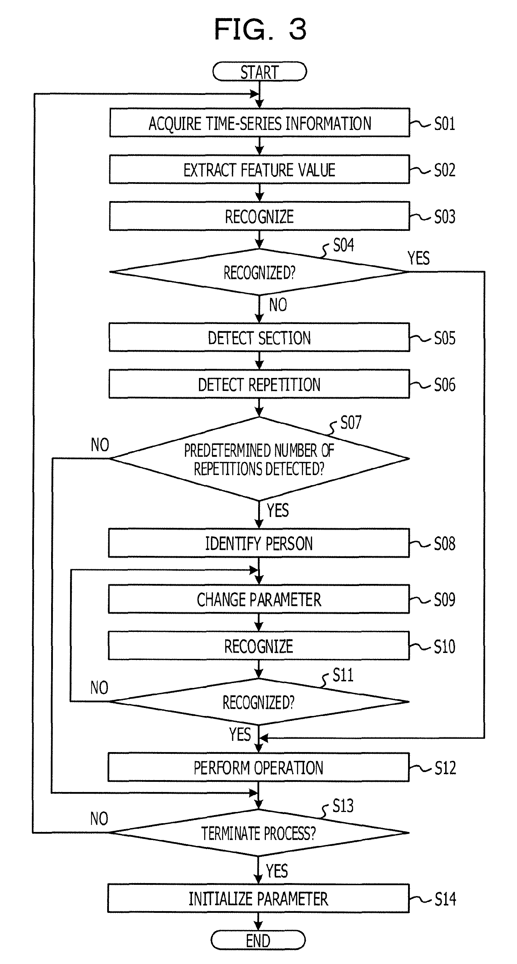

Here, an example of processing of the signal processing device 10 in this embodiment will be described with reference to a flowchart. FIG. 3 is a flowchart illustrating an example of processing of the signal processing device in this embodiment.

The time-series information acquisition unit 14 of the signal processing device 10 acquires time-series information of input signals provided by the user (S01). Examples of the input signals include, but are not limited to, motions (gestures) of the user's hand, finger, body, and so on obtained by the imaging unit 30, sound information, and detection signals obtained by using a finger, a touch pen, or the like through a touch panel. Note that, in the process of S01, the time-series information stored in advance in the storage unit 13 may be acquired, in addition to acquisition of time-series information from the time-series information imaging unit 30.

The feature value extraction unit 15 of the signal processing device 10 extracts a feature value for the acquired time-series information (S02).

The recognition unit 16 of the signal processing device 10 performs recognition of an operation content by comparing the extracted feature value with a parameter (the first recognition condition) for recognizing a preset specific operation content (a class of input) (S03), and determines whether the extracted feature value is recognized as a specific operation content (S04). In the process of S03, the recognition unit 16 determines whether the feature value extracted by the process of S02 is included in the range of feature values that is preset for each operation content, for example. Then, if the feature value is included in the range of feature values, which is a parameter, the recognition unit 16 recognizes the feature value as an operation content corresponding to the parameter.

If the recognition unit 16 does not recognize the feature value as the specific operation content (No at S04), the section detection unit 17 of the signal processing device 10 detects a section where the feature value has a displacement equal to or larger than a given threshold, as an action candidate section from time-series signals of feature values extracted by the process of S02 (S05).

The repetition detection unit 18 of the signal processing device 10 detects a repeating action included in the detected action candidate section (S06). Note that the repeating action refers to a repetition of the same or similar action, for example.

If the repetition detection unit 18 detects a given number of repetitions (Yes at S07), the identification unit 19 of the signal processing device 10 performs person identification (S08). The parameter change unit 20 of the signal processing device 10 changes a parameter (S09).

The changing of a parameter refers to changing from the current recognition condition so that a feature value for which an operation content has not been recognized in the process of S03, for example, is recognized as a given operation content among preset operation contents; however, the changing of a parameter is not limited to this.

Additionally, the parameter change unit 20 of the signal processing device 10 changes the parameter for recognition conditions set for every person (user) by the person identification at S08 mentioned above.

The recognition unit 16 of the signal processing device 10 performs recognition processing for the feature value acquired in the process of S02 using the parameter changed in the processing of S09 (the second recognition condition) (S10).

If the recognition unit 16 of the signal processing device 10 does not recognize a class of input (No at S11), the parameter change unit 20 of the signal processing device 10 further changes the setting of the changed parameter (the second recognition condition).

If the recognition unit 16 recognizes a class of input in the process of S04 or in the process of S11 (Yes at S04 or Yes at S11), the operation execution unit 21 of the signal processing device 10 performs processing corresponding to the recognized operation (S12).

If the given number of repetitions is not detected in the process of S07 (No at S07) or after the process of S12, the signal processing device 10 determines under the user's instruction or the like whether to terminate the process (S13). If the signal processing device 10 does not terminate the process (No at S13), the signal processing device 10 returns to the process of S01 and performs subsequent processing. At this point, the parameter referred to in the recognition process of S03 is the parameter (the second recognition condition) changed in the process of S09. Accordingly, in the subsequent processing, the recognition unit 16 may recognize, as an operation content, input signals provided by the user that the recognition unit 16 was not able to recognize previously.

Additionally, if the process is terminated under the user's instruction or the like in the process of S13 (Yes at S13), the parameter change unit 20 of the signal processing device 10 may initialize the parameter changed in the process of S09 (the second recognition condition) to restore it to the parameter before changing (the first recognition condition) and then ends the process (S14). Thereby, incorrect recognition caused by excessively changing a parameter may be inhibited. Note that the time point at which the parameter is returned to the original parameter is not limited to the time point of S14, and the parameter may be initialized after a given period of time has elapsed or if an instruction has been provided from the user, for example.

Alternatively, for a parameter (the second recognition condition) that has been subjected to a change in the class of input recognized by the recognition unit 16, among one or a plurality of changed parameters, the parameter change unit 20 of the signal processing device 10 may initialize the parameter (return the parameter to the first recognition condition) after a given period of time has elapsed or if an instruction has been provided from the user. Additionally, for a parameter (the second recognition condition) that has been subjected to a change in the class of input not recognized by the recognition unit 16, the parameter change unit 20 of the signal processing device 10 may initialize the parameter (return the parameter to the first recognition condition) if signal processing will be terminated.

In the example described above, the process may also be terminated if the section is not detected in the process of S05 or if a class of input is not recognized even when the parameter is expanded a given number or more times in the process of S11. As described above, the signal that has not been recognized may be recognized in this embodiment.

Note that the parameter change unit 20 performs processing for changing a parameter when the operation content is not recognized by the recognition processing in the process of S03, but is not so limited. For example, without performing the process of S03 and the process of S04, the parameter may be changed if the repetition of the feature value within a given section is detected in the process of S05 and the process of S06.

Additionally, in the process described above, the identification unit 19 performs the person identification processing illustrated at S08, but is not so limited. If the person identification is not performed, the parameter change unit 20 changes the parameter for recognition conditions common to users in the parameter change process of S09.

<Specific Example of Signal Processing>

A specific example of the signal processing described above will be described next with reference to the drawings. Note that, in the description given below, an example where the user's gesture action is acquired from a picture (the time-series information of an image frame) captured, for example, by the imaging unit 30 and then the operation content is recognized will be described. In this case, it is assumed that the output feature represents the barycentric coordinates of the user's hand.

<Example of Feature value Extraction Processing>

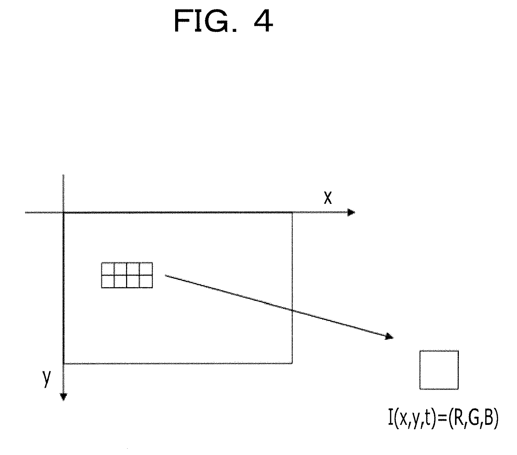

First, an example of the feature value extraction processing described above will be described specifically. FIG. 4 is a diagram illustrating an example of an input image in a frame t. In this embodiment, the feature value extraction unit 15 of the signal processing device 10 extracts a feature value from input time-series image information $I(x, y, t)$.

Here, $I(x, y, t)$ is given in the form of a color image expressed, for example, in an arbitrary color space, and also has a coordinate system $(x, y)$ with the origin at the upper-left corner or the like of the image. Additionally, the frame t represents a frame at a time point t in the time series. That is, in this embodiment, the feature value extraction unit 15 of the signal processing device 10 extracts a feature value based on the color information (R, G, B) of a pixel corresponding to coordinates for every frame, as illustrated in FIG. 4.

Note that while a frame image is given in a color space of red, green, and blue (RGB) in the example of FIG. 4, information, for example, based on a color space of YUV, HSV, or the like may be input. If information based on a color space of YUV, HSV, or the like is input, the information may be converted to another color space.

In the case of using coordinates of an image representing the position of a hand as a time series of feature values, the feature value extraction unit 15 of the signal processing device 10 cuts out a beige portion, removes a face portion if desired, and cuts out the region of a hand, from a frame image, for example, and uses the barycentric coordinates of the region from the resultant image, as the coordinates of the hand.

By way of an example, in the case where the region of skin is detected and where RGB of image data is converted to HSV, equations (1) given below are used.

$$V = \text{MAX}(R, G, B)$$
$$S = \frac{\text{MAX}(R, G, B) - \text{MIN}(R, G, B)}{V}$$
$$H = \cos^{-1}\left\{\frac{(G-B)+(G-R)}{2\sqrt{(G-B)^2+(G-R)(B-R)}}\right\} \quad \cdots (1)$$

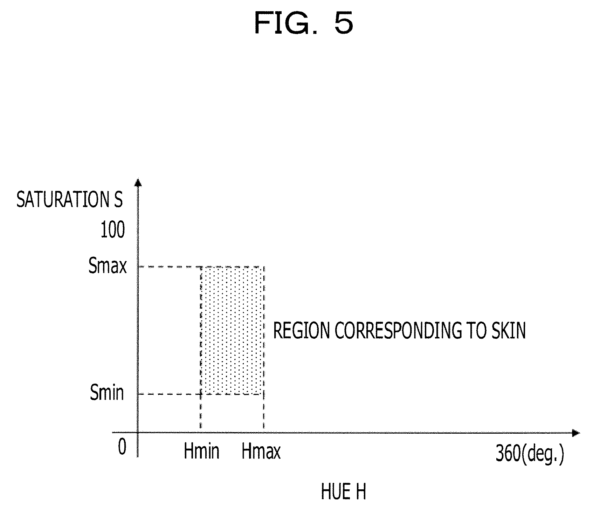

FIG. 5 is a diagram illustrating an example of a skin region on the HS plane. In this embodiment, for conversion to HSV according to the equations (1) mentioned above, the feature value extraction unit 15 of the signal processing device 10 converts the RGB values of pixels to the HSV space, and extracts, as pixels of skin, only the pixels whose brightness V is equal to or larger than a threshold and that have specific values of the hue H and the saturation S. In this case, the saturation S is obtained by equation (2) given below.

$$S_M = \left| R\vec{r} + G\vec{g} + B\vec{b} \right|$$
$$= \left| \left(\frac{(R-G)+(R-B)}{2}\right), \left(\frac{\sqrt{3}(G-B)}{2}\right) \right|$$
$$= \sqrt{\left(\frac{(R-G)+(R-B)}{2}\right)^2 + \left(\frac{\sqrt{3}(G-B)}{2}\right)^2} \quad \cdots (2)$$

where

$$\vec{r} = (1, 0)$$

$$\vec{g} = \left(-\frac{1}{2}, \frac{\sqrt{3}}{2}\right)$$

$$\vec{b} = \left( -\frac{1}{2}, \quad -\frac{\sqrt{3}}{2} \right)$$

As a result, in the obtained image, the pixel representing skin is "1", and the pixel that is not a pixel representing skin is "0". This image is described as a skin image $Ct = C(x, y, t)$.

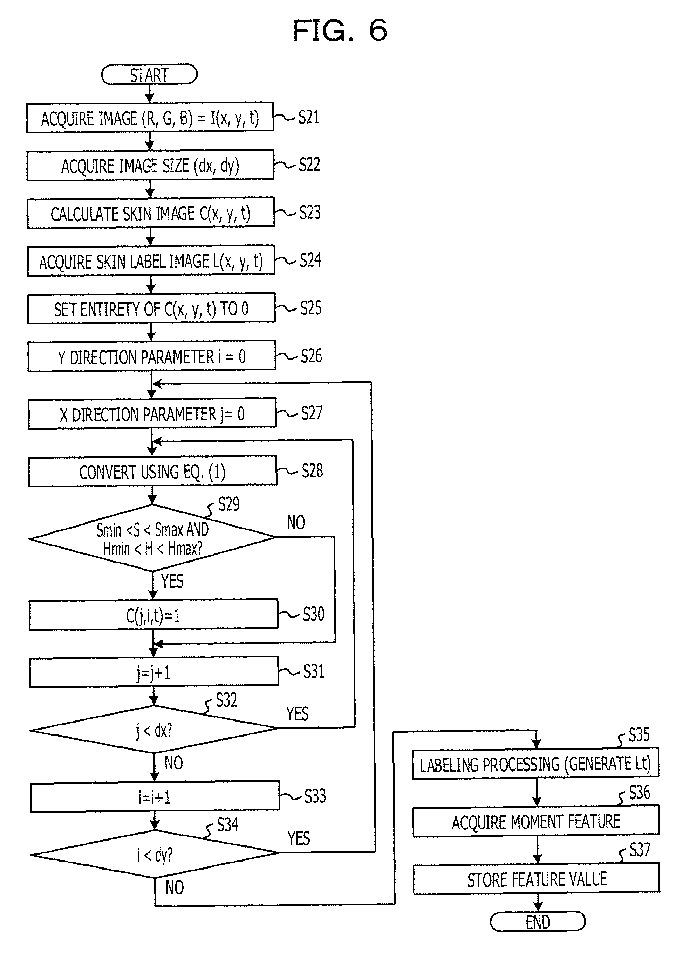

Here, an example of processing of the feature value extraction unit 15 described above will be described with reference to a flowchart. FIG. 6 is a flowchart illustrating an example of processing of a feature value extraction unit. The feature value extraction unit 15 of the signal processing device 10 first acquires the color information (R, G, B) of each pixel in a frame (image (R, G, B) =$I(x, y, t)$) (S21), and then acquires an image size (dx, dy) (S22).

The feature value extraction unit 15 of the signal processing device 10 calculates a skin image $C(x, y, t)$ using the processing and so on mentioned above (S23), and acquires a skin label image $L(x, y, t)$ (S24). Here, as initial values, the feature value extraction processing sets the entirety of $C(x, y, t)$ to 0 (S25), a Y-direction parameter $i = 0$ (S26), and an X-direction parameter $j = 0$ (S27).

The feature value extraction unit 15 of the signal processing device 10 performs conversion from an RGB color space to an HSV color space using equations (1) mentioned above (S28). The feature value extraction unit 15 of the signal processing device 10 determines whether the values of the saturation S and the hue H in the converted HSV space are each larger than the preset minimum value and smaller than the preset maximum value (S29). That is, in the process of S29, the feature value extraction unit 15 of the signal processing device 10 determines S and H for each pixel, and determines whether the determined values are inside of a preset threshold region ($Smin < S < Smax$ and $Hmin < H < Hmax$).

Here, if the conditions of S29 are satisfied (Yes at S29), only for pixels inside of the range, the corresponding pixels of C are set to "1" ($C(j, i, t) = 1$) (S30). After the process of S30 or if the conditions of the process of S29 are not satisfied (No at S29), the feature value extraction unit 15 of the signal processing device 10 increments (+1) the value of j (S31), and determines whether j is less than dx (S32).

If j is less than dx (Yes at S32), the feature value extraction unit 15 of the signal processing device 10 returns to the process of S28. Alternatively, if j is not less than dx (No at S32), the feature value extraction unit 15 of the signal processing device 10 increments (+1) the value of i (S33), and determines whether i is less than dy (S34). If i is less than dy (Yes at S34), the feature value extraction unit 15 returns to the process of S27.

If j is not less than dx (No at S34), the feature value extraction unit 15 of the signal processing device 10 generates a label table (LT) by performing labeling processing (S35). The feature value extraction unit 15 of the signal processing device 10 acquires features, for example, a moment and so on as feature values (S36) and stores the obtained features of a hand in the storage unit 13 (S37).

Note that, in the feature value extraction processing illustrated in FIG. 6, although the feature value extraction unit 15 of the signal processing device 10 deletes small regions by performing a labeling processing as illustrated at S35, the processing mentioned above does not have to be performed. The labeling processing (connected component processing) gives the separation and join relationship between regions in such a manner that the same label is given to pixels of two skins connected to each other only along the skin regions, and different labels are given to the other pixels. Additionally, in the process of S35, the feature value extraction unit 15 of the signal processing device 10 generates the separation and join relationship between regions based on labels given using the approach mentioned above, as a label table (LT). This makes it clear whether regions are isolated, and also makes it possible to delete only small skin regions by deleting regions of labels having pixels equal to or less than a threshold Thr given in advance. An approach as presented in "R.M. Haralick and L. Shapiro, Computer and robot vision, Addison-Wesley, pp. 28-48, 1992" may be used for labeling by way of example but does not necessarily have to be used.

In this embodiment, using processing described above, regions to be used for gesture recognition and so on, for example, are determined. For example, when it is desirable to remove the region of a face, regions overlapping a face region detected by a face detection algorithm are removed, so that only a desired region may become a target region.

As a result, the feature value extraction unit 15 of the signal processing device 10 may extract barycentric coordinates (xt, yt) (= the primary moment feature) in each frame as a feature value w(t). Additionally, another feature in which a secondary moment feature, such as a region size Mxx, Mxy, Mxz, or the like represented as a moment feature M0 is included as an element may be used. Thereby, a feature may be handled as a higher-level feature vector, in addition to the primary moment feature mentioned above.

The series feature acquired using the approach described above is represented as $w(t) = w(i, t)$. At this point, $i = \{0, ..., D\}$, and it is assumed that D is a feature dimension and t is time. For example, in the gesture recognition mentioned above, since two dimensions of x and y are given, $D = 2$.

<Example of Recognition Processing>

An example of the recognition processing described above will be described specifically next. In the recognition unit 16, upon generation of feature values on a time-series basis, recognition of the operation content or the like is performed using the time-series feature values. In the recognition unit 16, if a support vector machine and so on are used, for example, recognition may be expressed by equation (3) given below.

$$ f(x) = sign(\sum_{t=0}^{t'} \mathbf{w}_{z+t}^{T} \mathbf{x}_t + b_t) \qquad \cdots (3) $$

Depending on whether an output f obtained from equation (3) mentioned above is positive or negative, the recognition unit 16 discriminates whether the feature value is included in a specific class of input (for example, a specific gesture). Here, it is assumed that t' represents a time window and z represents an offset to an arbitrary time point. Additionally, $x_t$ and $b_t$ represent parameters for operating identity aspects. In particular, it is assumed that $x_t$ represents a parameter vector of D dimensions, and the value of an element i is represented using $x_{it}$. By varying these parameter values $x_{it}$ and $b_t$, different results may be output even when the same feature is input.

For example, in this embodiment, for a feature value that has not been recognized, processing is performed in such a manner that a given repeating action is detected, and the recognition condition is relaxed by decreasing the threshold for parameters so that the repeating action is able to be recognized as a given operation content. Note that, for the parameters $x_t$ and $b_t$, it is assumed that certain values are given in advance by learning.

Additionally, in this embodiment, a decision tree may be used as an example of another discriminator, for example. In Iterative Dichotomiser3 (ID3) for creating a decision tree, each dimension of a feature is handled independently, and the entropy given when separation using a threshold j is performed for a certain feature dimension i is M(i, j).

Assuming that the minimum value $M_j(i)$ of M(i, j) when j is changed is $M_j(i) = \min \ldots_j M(i, j)$, separation with the optimal feature may be given as $M_{ij} = \min_i M_j(i)$.

After the discriminator at the initial stage is selected in details mentioned above, the same operations as mentioned above are performed for each separated class of input using a feature other than the used feature, so that a decision tree may be generated. Note that, during the discrimination, a determination is made using a feature used for discrimination from the level of the root in a tree structure, and then processing may proceed to the next level of hierarchy.

Furthermore, another discriminator is, for example, boosting. In boosting, which is a method for generating a strong discriminator by combining a plurality of different (weak) discriminators, assuming that the number of connections of discriminators is J and N samples having a correct answer yi is provided, a decision is made depending on the sign of equation (4) given below.

$$ H(\mathbf{x}) = \sum_{j=0}^{J} c_j h_j(\mathbf{x}) \qquad \cdots (4) $$

Here, the positive sign of equation (4) mentioned above represents that a sample x is included in a desired class of input, whereas the negative sign represents that the sample x is not included in the class of input. Here, assuming that each discriminator is h, and the weight for each discriminator is $w_j$, $w_i$ is the weight for each sample, and the initial value thereof is 1/N. A discriminator $h_j(x)$ is learned (an optimal weak discriminator is selected) using a weight $\{w_i\}$. Note that the discriminator is a discriminator that minimizes $err_j = E$ [sample with which $y_i \neq h_j(x_i)$]. Here, E represents an expected value. That is, when $err_j = E$ [sample with which $y_i \neq h_j(x_i)$], the weight for each sample under the condition of equation (5) expressed below is updated by the equation given below, and j is advanced.

$$c_j = \log\left(\frac{1 - err_j}{err_j}\right) \qquad \cdots (5)$$

Under the condition of equation (6) given below, w is normalized.

$$w_i \leftarrow w_i \exp[\sum_{y_i \neq f_j(x_i)} c_j] \qquad \cdots (6)$$

Additionally, in this embodiment, as another discrimination example, a discrimination may be made by applying a neural network as presented in Japanese Laid-open Patent Publication No. 2011-209773, for example. Furthermore, in this embodiment, threshold processing, which is simpler, may be used as another example. For example, the identifying processing using a threshold $b_t$ may also be used as equation (7) given below.

$$f(x) = \begin{cases} 1 & \max(w(i,t)) < b_t \\ -1 & \textit{Otherwise} \end{cases} \qquad \cdots (7)$$

At this point, if f(x) = 1, it is indicated that the sample is included in a specific class of input, and otherwise (for example, f(x) = -1), it is indicated that the sample is not included in the specific class of input. Note that the recognition approach in this embodiment is not limited to this.

<Example of Section Detection Processing>

An example of section detection processing will be described specifically next. If the feature value is not recognized as a specific class of input (operation content) in the recognition unit 16 described above, the section detection unit 17 detects a section where, for a feature value that appears before a given time point z, for example, the displacement of the feature value is equal to or larger than a given threshold, as a candidate section where the user is performing any action.

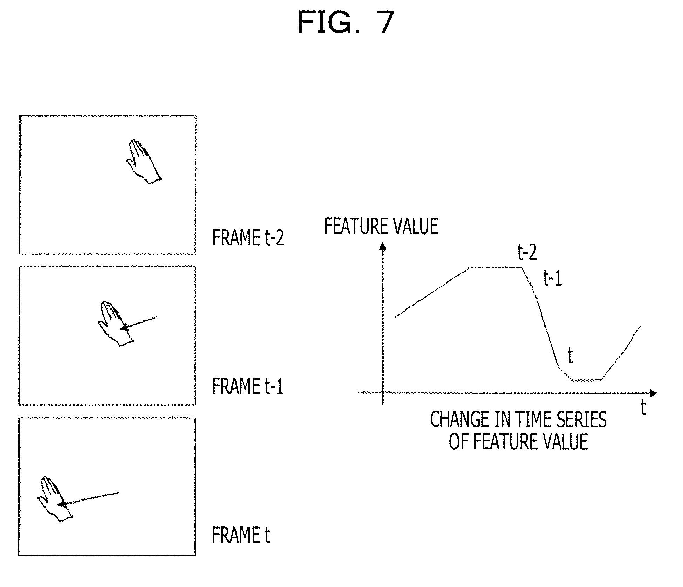

Here, FIG. 7 is an illustration for explaining motions of a hand and the changes thereof. In the example of FIG. 7, a frame (frame t) at a given time point t, a frame (frame t - 1) one frame before the frame t, and a frame (frame t - 2) two frames before the frame t are extracted.

In each image frame, a feature value based on the position and the motion of a hand (an arrow and so on in FIG. 7) as described above, for example, is extracted, a portion where the hand moves to an extent equal to or more than a given threshold (Thd) is extracted from the change in the feature value on the time series (time t), and this portion is checked on the time series, so that a candidate section is detected. Note that, in the example mentioned above, detection is based on the displacement in the feature value of a hand at an interval of one frame, but is not so limited. For example, the candidate section may be detected based on the displacement in the feature value at an interval of several frames, for example.

Regarding the candidate section, if the difference (absolute value) between the maximum and the minimum in a section is larger than a given threshold (Th) in a section having distances of $\pm\Delta t$ relative to a given time point t, for example, the time point t of interest at this time point is regarded as a candidate section point. This operation is performed in sequence retroactively, and candidate section points are extracted at previous time points. Note that the time points to which extraction is retroactive may, but do not have to, be separated by a given period of time, such as the past 10 seconds. Additionally, if candidate section points adjacent to each other are $2\Delta t$ or more away from each other, the top of the candidate section is determined to be the current position t, and the end of the candidate section is determined to be the initial time point at which a feature value is cut.

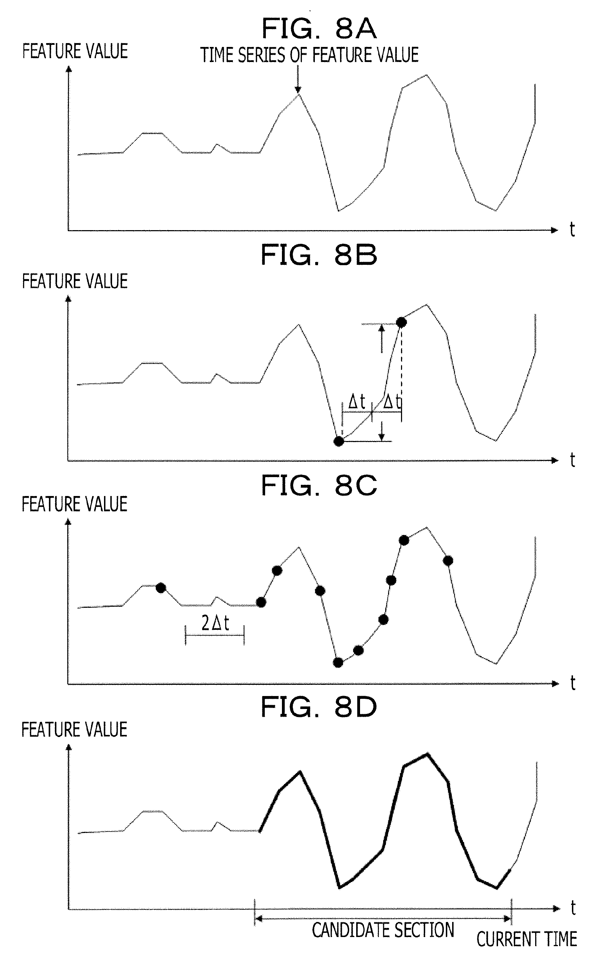

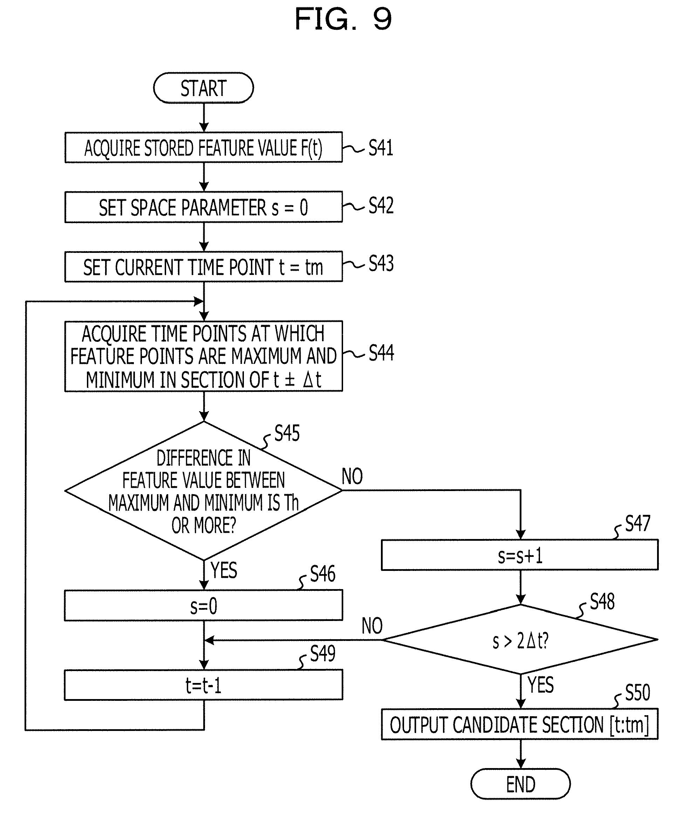

Here, FIG. 8A to FIG. 8D are graphs illustrating an example of detection of a candidate section performed by a section detection unit. FIG. 9 is a flowchart illustrating an example of processing of a section detection unit.

In this embodiment, the section detection unit 17 acquires feature values (time-series feature values) corresponding to time-series information associated with the passage of the time point t as illustrated in FIG. 8A. Then, the section detection unit 17 detects a section where the distances relative to a certain time point t are $\pm\Delta t$ and, for example, where the difference between a time point at which the feature value is maximum and a time point at which the feature value is minimum is equal to or larger than a threshold Th. Then, the section detection unit 17 acquires the maximum and minimum time points between which the difference is made (time points corresponding to the positions of "bullets" in FIG. 8B).

The section detection unit 17 performs the processing described above while displacing the time point t at given intervals, and thus acquires one or a plurality of time points (time points corresponding to the positions of "bullets") concerned as illustrated in FIG. 8C.

Furthermore, the section detection unit 17 connects the sections where the difference in the feature value between two time points acquired in the processing described above is within a given range (for example, equal to or less than 2$\Delta t$), thereby detecting, for example, a candidate section before the current time as illustrated in FIG. 8D.

In particular, as illustrated in FIG. 9, the section detection unit 17 acquires a time series of feature values F(t), as illustrated in FIG. 8A, stored in the storage unit 13 or the like, for example (S41). The section detection unit 17 initializes a space parameter s for setting a candidate section (space parameter s = 0) (S42). Note that the space parameter s is a parameter for managing a time width in which the difference in the feature value between two time points is less than the threshold in subsequent processing (a time width with a small motion).

The section detection unit 17 sets the current time t to tm (S43), and acquires a time point at which the feature value is maximum and a time point at which the feature value is minimum, in the section of t$\pm\Delta t$ (S44).

The section detection unit 17 determines whether the difference between the maximum feature value and the minimum feature value at the two time points acquired in the process of S44 is equal to or more than the threshold Th (S45). If the difference between the maximum feature value and the minimum feature value is equal to or more than the threshold Th (Yes at S45), the section detection unit 17 determines that any action is performed in the section, and resets the space parameter s to the initial value (s = 0) (S46) in order to perform processing on the condition that the time point t is set earlier.

If the difference between the maximum feature value and the minimum feature value at the two time points is not equal to or more than the threshold Th (No at S45), the section detection unit 17 increments (+1) the value of the space parameter s (S47). Note that the process of S47 refers to, for example, that the time width in which the difference between the maximum feature value and the minimum feature value described above is less than the threshold continues for one second, but is not so limited. The section detection unit 17 determines whether the period of time corresponding to the space parameter s is over 2$\Delta t$ (S48).

If the period of time is not over 2$\Delta t$ (No at S48) or after the process of S46 described above, the section detection unit 17 decrements (-1) the time t (S49), and returns to the process of S44. That is, the process of S49 refers to, for example, shifting a time series of interest to a previous time point (for example, -1 second), but is not so limited.

If the period of time corresponding to the space parameter s is over 2$\Delta t$ in the process of S48 (Yes at S48), the section detection unit 17 outputs the section as a candidate section [t:tm] (S50). That is, in the processing of FIG. 9, the section detection unit 17 detects a section in which the user successively performs any action as a candidate section of a repeating action.

Note that the processing described above detects a candidate section based on feature values for an image, but is not so limited. For example, the same processing may be applied to the section detection of the case where input signals are sound, for example.

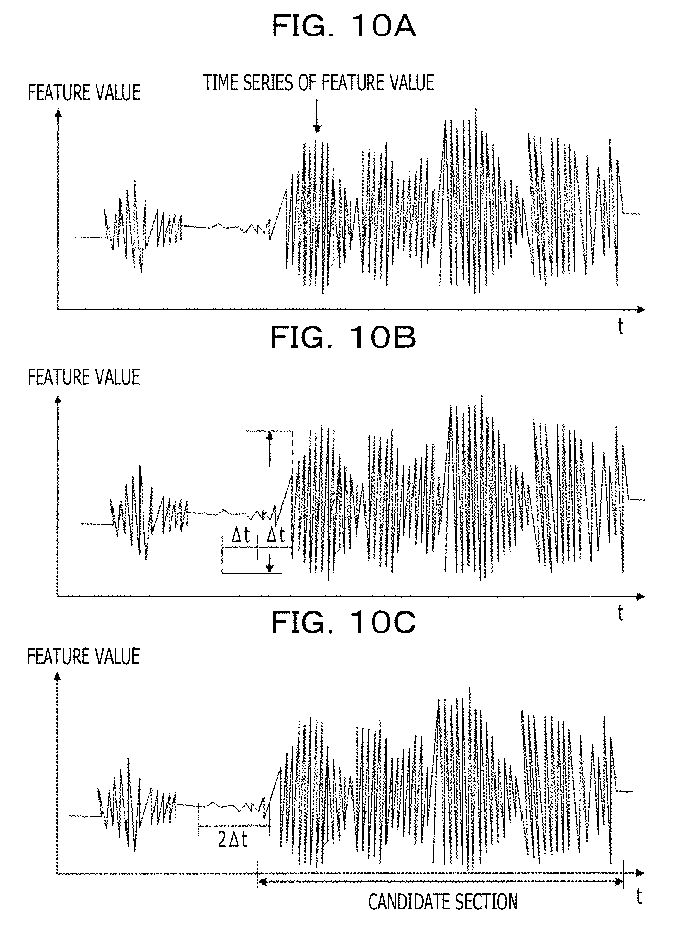

FIG. 10A to FIG. 10C are graphs illustrating detection examples of candidate sections for sound. The section detection unit 17 is capable of detecting a candidate section for time-series feature values, for example, using amplitudes and so on in order to detect a candidate section for sound. For example, for time-series information illustrated in FIG. 10A, a section where the difference between the maximum feature value and the minimum feature value in the range of $\pm\Delta t$ relative to a certain time point t is equal to or more than Th as illustrated in FIG. 10B is detected. Then, as illustrated in FIG. 10C, a candidate section using sound may be detected by connecting candidate sections (time) within the range of 2$\Delta t$.

Furthermore, in this embodiment, the section detection unit 17 may also apply the same processing to the operation to a touch panel and so on. For example, when the position of the viewpoint is displaced, the user sometimes touches (taps) a touch panel at a position displaced from a position at which the touch panel is to be pressed. However, no reaction occurs when the user touches the touch panel at the displaced position, and therefore the user touches it again at a position therearound. A human being has a tendency of continuing touching while changing the touch position if no reaction occurs. In such a case, using the information on a position at which the user touches a touch panel, and the periodic information thereof, the displacement of the position is corrected, so that the recognition condition may be changed.

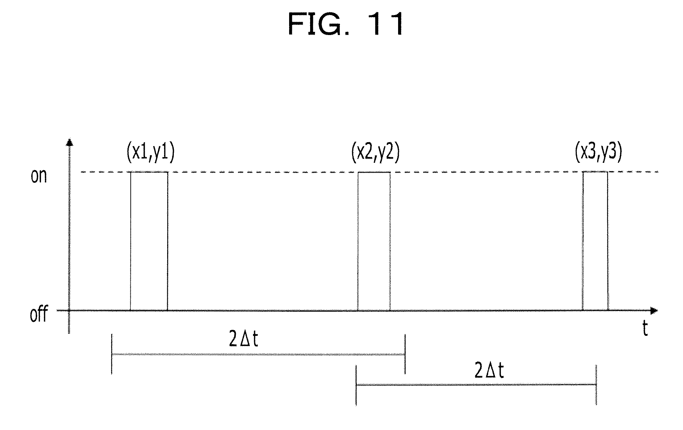

FIG. 11 is a graph illustrating a specific example of candidate section detection. FIG. 11 illustrates an example of detection of a candidate section for a touch operation. In the example of FIG. 11, it is assumed that the state where the user's finger or the like touches a touch panel is an on-state, and the state where the user's finger or the like does not touch the touch panel is an off-state. Additionally, (x1, y1), (x2, y2), and (x3, y3) represent position coordinates on the panel that the user touches. The position coordinates are exemplary feature values extracted by the feature value extraction unit 15.

In the example of FIG. 11, input signals provided by the user touching a touch panel three times as time passes are illustrated, and two signals in the on-state exist within 2Δt. Additionally, if the distance between (x1, y1), and (x2, y2) is less than a given threshold, and the distance between (x2, y2), and (x3, y3) is less than the given threshold, a signal section ((x1, y1) to (x3, y3)) illustrated in FIG. 11 may be detected as a candidate section. Note that, the approach for section detection is not limited to the examples described above, and detection approaches described above may be combined.

<Example of Repetition Detection Processing>

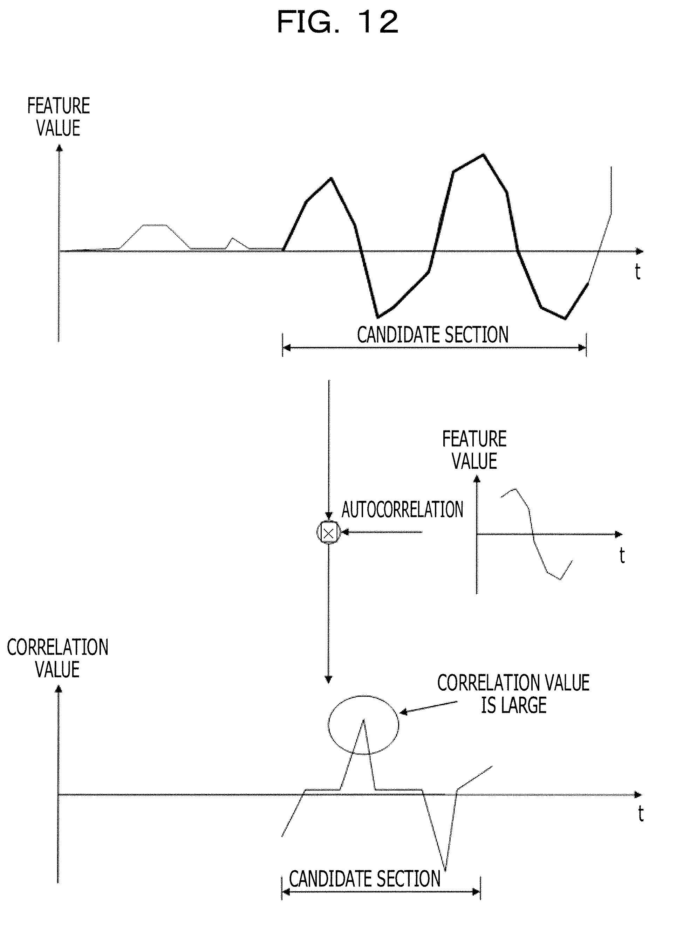

An example in which the repetition detection unit 18 detects a repeating operation using the candidate section detected by the section detection unit 17 will be described next. FIG. 12 illustrates an explanation for a repetition detection unit.

From the candidate section detected by the section detection unit 17, the repetition detection unit 18 detects the presence or absence of a repetition of a time-series feature value and the period of the repetition if the repetition is present, for example. As illustrated in FIG. 12, for example, the repetition detection unit 18 applies, to a time series w(t) of the feature values obtained as the candidate section described above, the autocorrelation thereof, which is obtained by equation (8) given below.

$$R(k) = \frac{E\left[(w(t) - \mu)(w(t+k) - \mu)\right]}{\sigma^2} \qquad \cdots (8)$$

Here, in equation (8) given above, $\mu$ represents the average for w(t), $\sigma^2$ represents a variance, and E[ ] represents an expectation. In addition, k represents a time lag in an autocorrelation. For example, when R(k) is large, it is indicated that the correlation with the time lag is high.

Note that the time series, which is a source of an autocorrelation, is a time series of sections made up of given time widths included in the candidate section described above, but is not so limited. At this point, for example, it is assumed that time lags of an autocorrelation that satisfy the condition that the autocorrelation has a value larger than a preset threshold and a portion forming a peak exists, that is, "R(k - 1) < R(k)" and "R(k + 1) < R(k)", more generally, "R(k + n) < R(k), n = {-N,..., N}" provided that a time width N is given in advance are represented as t1, t2, ....

When such a repetition is able to be detected, the parameter change unit 20 will perform subsequent processing. Note that, in the case where the parameter is changed for a user who performs an operation, identification processing of the identification unit 19 may be performed.

Note that, in this embodiment, when performing the processing described above, the repetition detection unit 18 may remove a portion corresponding to the mean of signals included in a candidate section. For example, the repetition detection unit 18 determines the bias (mean) of signals included in a candidate section, and sets a portion where the determined bias (mean) of signals is removed from the time series w(t) of feature values, as new w(t). In this way, by removing a portion corresponding to the bias, the repetition detection unit 18 may perform adjustment so that the center of values of feature values is set to 0 (origin). For example, when the width of the values of signals is from 0 to 255, the width may be adjusted to the range from -128 to 128. This may facilitate calculation of a correlation described below.

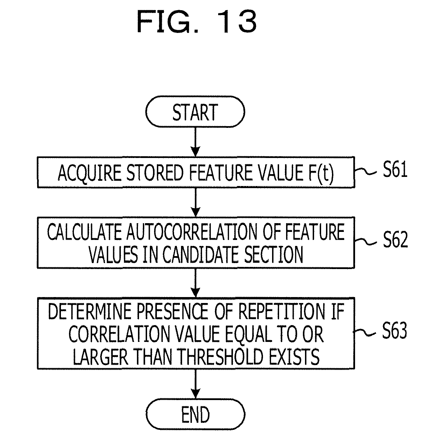

FIG. 13 is a flowchart illustrating an example of processing of a repetition detection unit. The repetition detection unit 18 acquires a feature value F(t) stored in the storage unit 13 or the like (S61), and then calculates the autocorrelation of feature values in a candidate section (S62). If there is a large correlation value, which is equal to or larger than a threshold, the repetition detection unit 18 determines that a repetition exists (S63).

Note that the approach described above may detect a repetition similarly for audio time-series feature values. Additionally, for the repetition determination in the case where the user touches a panel, as illustrated in FIG. 11, for example, if the starting times of pressing of portions where the coordinates of touching are similar are within 2Δt, and any operation is performed, it may be determined that a repeating operation continues. That is, in this embodiment, a repetition may be determined by checking the similarity of coordinates.

<Example of Processing of Parameter Change Unit 20>

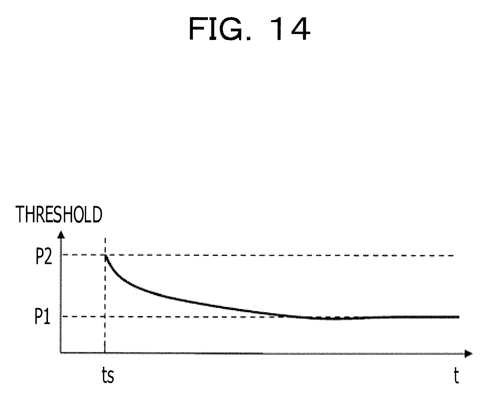

An example of processing of the parameter change unit 20 described above will be described specifically next. The parameter change unit 20 changes a parameter and generates a parameter with which a gesture is likely to be recognized. Here, FIG. 14 is a graph illustrating a specific example of parameter changing. In the example of FIG. 14, in order to change a parameter gradually, a given curve expression is used.

For example, it is assumed that the minimum of a threshold that may be changed is P1, the maximum thereof is P2, and a time point of the initial threshold (maximum P2) is ts. That is, P1 and P2 in the threshold are parameters that are preset in order to indicate the volumes of parameters (recognition conditions) to be changed, respectively, and P2 is the original threshold (the first recognition condition).

At this point, the parameter at a certain time t may be set to "$(P2 - P1) / P2 \times \mathrm{Exp}(-(t - ts)) + P1$". That is, the threshold is set so as to become smaller as time passes. In this way, by varying the parameter with the passage of time, a gesture and so on are likely to be detected by the recognition unit 16 only when a repetition arises.

Note that, in the example of FIG. 14, the threshold is changed using a curve expression, but is not so limited, and the parameter change unit 20 may set a parameter with the amount of change corresponding to the amount of time using a straight line expression. Additionally, the parameter change unit 20 may, but does not have to, change a parameter, for example, based on the number of times of recognition processing and so on. For example, the parameter change unit 20 may combine the curve expression and the straight line expression mentioned above, and so on.

In order to identify a class of input, the parameter change unit 20 may make a gradual change as described above for one or a plurality of parameters (recognition conditions).

Additionally, in this embodiment, as other examples, the parameter change unit 20 may perform recognition, for example, under the conditions that the parameter remains fixed, and signals themselves of a times series of feature values to be recognized are changed (for example, they are amplified). In this case, changing the signals results in changing the recognition conditions.

For the input signals of time-series feature values, the parameter change unit 20 may change original signals (signals of time-series feature values) as time passes, for example, by multiplying the original signals by the result of multiplying the reciprocal of the curve expression mentioned above by P2, "$P2 / \{(P2 - P1) / P2 \times \mathrm{Exp}(-(t - ts)) + P1\}$". This may cause recognition to be more likely to be made in the recognition unit 16 as time passes, without changing a parameter.

Additionally, in another example, the feature value obtained from input signals may also be operated. For example, a time series of feature values is determined again using an autocorrelation as mentioned below, and recognition may be made for w'(t) obtained as "$w'(t) = w(t) + a1R.(t1)w(t - t1) + a2R(t2)w(t - t2)...$". The a1 and a2 mentioned above are preset parameters, and t1, t2, ... represent time lags in which the autocorrelation has a peak. By processing in this way, when a repetition is given, a signal may be amplified and processed using the sum of the magnitudes of all the signals of repetition information.

With the processing described above, in the recognition unit 16, even an action of waving a hand slowly and narrowly is recognized as a gesture for a class of input (operation content) for which a gesture action was not previously recognized unless a hand is waved at a given speed and widely to some extent. Additionally, in the case where input signals are sound, for a class of input for which sound was not previously recognized unless the user speaks slowly in a loud voice, for example, the class of input is recognized even when the user speaks fast in a low voice.

Additionally, for operations to a touch panel and so on, for example, the parameter change unit 20 may change a parameter to cause input signals that were not previously recognized to be able to be recognized. For example, when the user touches a panel at a position displaced from a position at which the touch panel is to be pressed as mentioned above, the parameter change unit 20 may correct the position displacement using information on the position at which the user touches the touch panel, and the periodic information thereof, thereby changing a recognition condition.

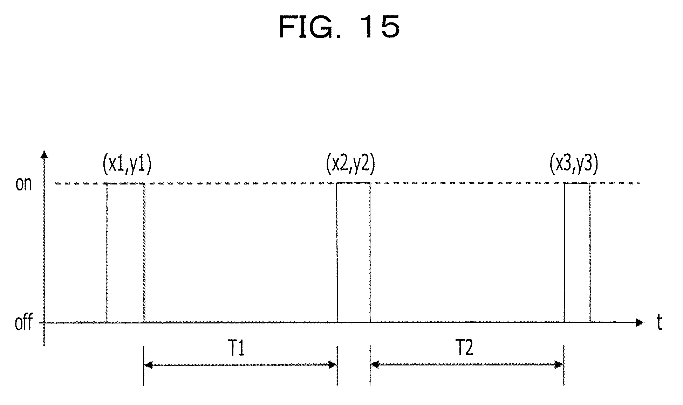

FIG. 15 is a graph illustrating an example of the position coordinates and intervals of touches. The example of FIG. 15 illustrates, as time passes as in FIG. 11 mentioned above, the on and off states corresponding to touches to a touch panel, touch intervals (T1, T2), and coordinates {{x1, y1), (x2, y2), (x3, y3)) as feature values.

For example, from the relationship between the position information mentioned above and a threshold Th1 having a preset distance, the section detection unit 17 detects the case where "$(x1 - x2)^2 + (y1 - y2)^2 < Th_1$" and "$(x2 - x3)^2 + (y2 - y3)^2 < Th_1$" and "$|T1 - T2| < Th_2$". Furthermore, the section detection unit 17 may regard that a correlation is obtained when a touch 1 (x1, y1), a touch 2 (x2, y2), and a touch 3 (x3, y3) do not touch any button.

Additionally, the section detection unit 17 may regard each on-state as a large portion of the correlation. In this case, the repetition detection unit 18 regards each of the touches 1, 2, and 3 as a repeating action. The parameter change unit 20 changes a parameter so that the position coordinates may be recognized. Thereby, the recognition unit 16 recognizes the touch operations mentioned above as a certain class of input (operation content). Accordingly, touch displacement and so on of operation buttons due to the position of the user's line of vision may be cancelled.

Note that, the example of parameter changing for a touch panel is not limited to this and may be applied, for example, to recognition of operations such as double-tap, drag, flick, pinch-in, pinch-out, and swipe.

The operation execution unit 21 executes an operation content corresponding to the recognized class of input. For example, in the case where an operation of scrolling the screen to the left is assigned to an action of waving a hand to the left, if the recognition unit 16 mentioned above recognizes an action of waving a hand to the left, the operation execution unit 21 performs processing of scrolling the screen to the left.

As described above, according to this embodiment, signals that were not previously able to be recognized may become recognizable. For example, in the case where some gesture (or speaking, operations to a touch panel, and so on) was not previously able to be recognized as a specific class of input by the signal processing device, the signal processing device changes a range of signals to be recognized as a gesture, upon detecting that a gesture having a certain feature is repeatedly performed. Thereby, according to this embodiment, when a signal that is close to a signal belonging to a certain class of input but does not belong to the class of input concerned is repeatedly input, the close signal may be recognized as a close class of input.

That is, when a signal is repeatedly acquired, operations of detecting the repetition of the signal and assigning the signal to a class of input that is closest to the repeatedly input signal, so that the signal that was not previously recognized may be recognized. Additionally, according to this embodiment, without explicitly giving a learning phase, for example, a repeating operation may be detected, a signal that has not been detected using a conventional parameter (recognition condition) may be detected and handled in the same manner as a recognized signal.

Additionally, according to this embodiment, the learning described above is adjusted for every user by performing identification processing, so that a recognition condition suitable for every user may be set. Furthermore, the changed recognition condition is restored to the original state at a given time point, so that incorrect recognition caused by excessively relaxing a recognition condition may be inhibited.

As described above, while each implementation has been illustrated, the present disclosure is not limited to specific implementations, and various modifications and changes may be made other than the above modifications within the scope described by the claims.

## Claims

1. A signal processing device comprising:

   a repetition detection unit configured to detect a repetition of a feature value from a time series of the feature value corresponding to an input signal; and
   a recognition condition change unit configured to change a recognition condition for recognizing a class for the feature value when the repetition of the feature value is detected.

2. The signal processing device according to claim 1, wherein
   the input signal indicates an instruction from a user for an operation, and the class corresponds to the operation.

3. The signal processing device according to claim 1 or 2, wherein
   a class for recognizing the repetition of the feature value corresponds to a single operation indicated by an instruction from a user.

4. The signal processing device according to any one of claims 1 to 3, wherein
   the recognition condition change unit is configured to change the recognition condition, when the feature value has not been recognized using the recognition condition before the change.

5. The signal processing device according to any one of claims 1 to 4, wherein
   the recognition condition change unit is configured to change the recognition condition so that the feature value is recognized as a class for recognizing the repetition of the feature value.

6. The signal processing device according to any one of claims 1 to 5, wherein
   the recognition condition change unit is configured to change the recognition condition, when a part of the repetition of the feature value has not been recognized using the recognition condition before the change, so that the part of the repetition of the feature value is recognized as a class for recognizing the repetition of the feature value.

7. The signal processing device according to any one of claims 1 to 6, wherein
   the repetition detection unit is configured to detect the repetition based on a correlation between a first time series of the feature value at a first time point and a second time series of the feature value at a second time point in the time series of the feature value.

**8.** The signal processing device according to any one of claims 1 to 7, further comprising:

a recognition unit configured to recognize the class for the feature value using the changed recognition condition.

**9.** The signal processing device according to claim 8, wherein
the recognition condition change unit is configured to further change the changed recognition condition, when the class for the feature value has not been recognized using the changed recognition condition.

**10.** The signal processing device according to any one of claims 1 to 9, wherein
the recognition condition change unit is configured to change the recognition condition by at least one of changing a value of a parameter included in the recognition condition and varying the time series of the feature value.

**11.** The signal processing device according to any one of claims 1 to 10, further comprising:

a section detection unit configured to obtain, from the time series of the feature value corresponding to the input signal, a section in which successive feature values each having a given displacement amount are provided within a given interval, and wherein
the repetition detection unit is configured to detect the repetition of the feature value from the time series of the feature value in the obtained section.

**12.** The signal processing device according to any one of claims 1 to 11, further comprising:

an identifying unit configured to identify a user who has entered the input signal, and wherein
the recognition condition having been set to correspond with a user, and
the recognition condition change unit is configured to change the recognition condition with respect to the identified user.

**13.** The signal processing device according to any one of claims 1 to 12, wherein
the recognition condition change unit is configured to restore the changed recognition condition to the recognition condition before the change, when at least one of a given period of time has elapsed, a given action has been completed, and an instruction from a user has been provided.

**14.** A signal processing method comprising:

detecting a repetition of a feature value from a time series of the feature value corresponding to an input signal;
changing a recognition condition for recognizing a class for the feature value when the repetition of the feature value is detected.

**15.** A signal processing system comprising:

a signal processing device according to any one of claims 1 to 13; and
an input device configured to obtain the input signal, and to provide the input signal to the signal processing device.

# FIG. 1

```
┌─────────────────────────────────────────────────────────────────────────────────────────────────────────────┐ 10
│                                                                                                               │
│   ┌──────────┐ 17  ┌──────────┐ 18  ┌──────────┐ 19  ┌──────────┐ 20  ┌──────────┐ 21  ┌──────────────┐ 22  ┌──────────┐ 23
│   │ SECTION  │     │REPETITION│     │          │     │          │     │OPERATION │     │ TRANSMISSION │     │          │
│   │DETECTION │     │DETECTION │     │IDENTIFI- │     │PARAMETER │     │EXECUTION │     │AND RECEPTION │     │ CONTROL  │
│   │  UNIT    │     │  CATION  │     │ CHANGE   │     │          │     │   UNIT   │     │              │     │   UNIT   │
│   └──────────┘     └──────────┘     └──────────┘     └──────────┘     └──────────┘     └──────────────┘     └──────────┘
```

SECTION DETECTION UNIT — 17

REPETITION DETECTION UNIT — 18

IDENTIFICATION UNIT — 19

PARAMETER CHANGE UNIT — 20

OPERATION EXECUTION UNIT — 21

TRANSMISSION AND RECEPTION UNIT — 22

CONTROL UNIT — 23

INPUT UNIT — 11

OUTPUT UNIT — 12

STORAGE UNIT — 13

TIME-SERIES INFORMATION ACQUISITION UNIT — 14

FEATURE VALUE EXTRACTION UNIT — 15

RECOGNITION UNIT — 16

IMAGING UNIT — 30

EP 2 781 990 A1

# FIG. 2

```
  ┌──────────┐44   ┌──────────┐45   ┌──────────┐46   ┌──────────┐47
  │AUXILIARY │     │MAIN      │     │          │     │NETWORK   │
  │STORAGE   │     │STORAGE   │     │   CPU    │     │CONNECTION│
  │DEVICE    │     │DEVICE    │     │          │     │DEVICE    │
  └────┬─────┘     └────┬─────┘     └────┬─────┘     └────┬─────┘
       │                │                │                │
──┐────┴────────┬───────┴──────┬─────────┴──────┬─────────┴──────┌──
  B             │              │                │
       ┌────────┴──┐41  ┌──────┴───┐42   ┌───────┴──┐43
       │INPUT      │    │OUTPUT    │     │DRIVE     │
       │DEVICE     │    │UNIT      │     │DEVICE    │
       └───────────┘    └──────────┘     └────┬─────┘
                                              │
                                        ┌─────┴────┐48
                                        │RECORDING │
                                        │MEDIUM    │
                                        └──────────┘
```

# FIG. 3

```
                    ( START )
                        │
                        ▼
        ┌──────────────────────────────────┐
        │  ACQUIRE TIME-SERIES INFORMATION  │~ S01
        └──────────────────────────────────┘
                        │
                        ▼
        ┌──────────────────────────────────┐
        │       EXTRACT FEATURE VALUE       │~ S02
        └──────────────────────────────────┘
                        │
                        ▼
        ┌──────────────────────────────────┐
        │             RECOGNIZE             │~ S03
        └──────────────────────────────────┘
                        │
                        ▼         S04
                  ╱──────────────╲        YES
                 ╱   RECOGNIZED?   ╲────────────►
                 ╲                 ╱
                  ╲──────────────╱
                        │ NO
                        ▼
        ┌──────────────────────────────────┐
        │          DETECT SECTION           │~ S05
        └──────────────────────────────────┘
                        │
                        ▼
        ┌──────────────────────────────────┐
        │         DETECT REPETITION         │~ S06
        └──────────────────────────────────┘
                        │
                        ▼            S07
        NO        ╱──────────────────╲
     ◄───────────╱  PREDETERMINED NUMBER OF ╲
                 ╲  REPETITIONS DETECTED?    ╱
                  ╲──────────────────╱
                        │ YES
                        ▼
        ┌──────────────────────────────────┐
        │          IDENTIFY PERSON          │~ S08
        └──────────────────────────────────┘
                        │
                        ▼
        ┌──────────────────────────────────┐
        │          CHANGE PARAMETER         │~ S09
        └──────────────────────────────────┘
                        │
                        ▼
        ┌──────────────────────────────────┐
        │             RECOGNIZE             │~ S10
        └──────────────────────────────────┘
                        │
                        ▼          S11
        NO        ╱──────────────╲
     ◄───────────╱   RECOGNIZED?  ╲
                 ╲                 ╱
                  ╲──────────────╱
                        │ YES  ◄─────
                        ▼
        ┌──────────────────────────────────┐
        │         PERFORM OPERATION         │~ S12
        └──────────────────────────────────┘
                        │
                        ▼          S13
        NO        ╱──────────────╲
     ◄───────────╱ TERMINATE PROCESS? ╲
                 ╲                 ╱
                  ╲──────────────╱
                        │ YES
                        ▼
        ┌──────────────────────────────────┐
        │        INITIALIZE PARAMETER       │~ S14
        └──────────────────────────────────┘
                        │
                        ▼
                    (  END  )
```

# FIG. 4

$$I(x,y,t)=(R,G,B)$$

# FIG. 5

SATURATION S

100

Smax

Smin

0          Hmin   Hmax

REGION CORRESPONDING TO SKIN

360(deg.)

HUE H

# FIG. 6

START

ACQUIRE IMAGE (R, G, B) = I(x, y, t) — S21

ACQUIRE IMAGE SIZE (dx, dy) — S22

CALCULATE SKIN IMAGE C(x, y, t) — S23

ACQUIRE SKIN LABEL IMAGE L(x, y, t) — S24

SET ENTIRETY OF C(x, y, t) TO 0 — S25

Y DIRECTION PARAMETER i = 0 — S26

X DIRECTION PARAMETER j = 0 — S27

CONVERT USING EQ. (1) — S28

S29
Smin < S < Smax AND Hmin < H < Hmax? — NO

YES

C(j, i, t) = 1 — S30

j = j + 1 — S31

S32
j < dx? — YES

NO

i = i + 1 — S33

S34
i < dy? — YES

NO

LABELING PROCESSING (GENERATE Lt) — S35

ACQUIRE MOMENT FEATURE — S36

STORE FEATURE VALUE — S37

END

23

# FIG. 7

FRAME t-2

FRAME t-1

FRAME t

FEATURE VALUE

t-2

t-1

t

CHANGE IN TIME SERIES
OF FEATURE VALUE

# FIG. 8A

FEATURE VALUE

TIME SERIES OF FEATURE VALUE

t

# FIG. 8B

FEATURE VALUE

$\Delta t$  $\Delta t$

t

# FIG. 8C

FEATURE VALUE

$2\Delta t$

t

# FIG. 8D

FEATURE VALUE

CANDIDATE SECTION

CURRENT TIME

t

# FIG. 9

```
                    ┌─────────────┐
                    │    START    │
                    └──────┬──────┘
                           │
         ┌─────────────────▼─────────────────┐
         │ ACQUIRE STORED FEATURE VALUE F(t) │──S41
         └─────────────────┬─────────────────┘
                           │
         ┌─────────────────▼─────────────────┐
         │     SET SPACE PARAMETER s = 0     │──S42
         └─────────────────┬─────────────────┘
                           │
         ┌─────────────────▼─────────────────┐
         │   SET CURRENT TIME POINT t = tm   │──S43
         └─────────────────┬─────────────────┘
                           │
         ┌─────────────────▼─────────────────┐
         │   ACQUIRE TIME POINTS AT WHICH    │
         │ FEATURE POINTS ARE MAXIMUM AND    │──S44
         │   MINIMUM IN SECTION OF t ± Δt    │
         └─────────────────┬─────────────────┘
                           │
                         S45
                    ╱─────────────╲
                   ╱  DIFFERENCE IN ╲      NO
                  ╱ FEATURE VALUE BETWEEN╲──────────┐
                  ╲ MAXIMUM AND MINIMUM IS Th       │
                   ╲   OR MORE?   ╱                 │
                    ╲─────────────╱             ┌───▼───────┐
                          │ YES               S47│  s=s+1   │
                        S46│                     └───┬───────┘
                    ┌──────▼──────┐                  │
                    │     s=0     │               S48╱───────╲
                    └──────┬──────┘      NO      ╱   s > 2Δt? ╲
                        S49│  ◄───────────────────╲           ╱
                    ┌──────▼──────┐                 ╲─────────╱
                    │    t=t-1    │                      │ YES
                    └──────┬──────┘                    S50│
                           │                   ┌──────────▼──────────────┐
                           └──────►            │ OUTPUT CANDIDATE SECTION │
                                               │        [t:tm]           │
                                               └──────────┬──────────────┘
                                                          │
                                                   ┌──────▼──────┐
                                                   │     END     │
                                                   └─────────────┘
```

## FIG. 10A

FEATURE VALUE

TIME SERIES OF FEATURE VALUE

t

## FIG. 10B

FEATURE VALUE

$\Delta t$ | $\Delta t$

t

## FIG. 10C

FEATURE VALUE

$2\Delta t$

CANDIDATE SECTION

t

# FIG. 11

# FIG. 12

FEATURE
VALUE

t

CANDIDATE SECTION

AUTOCORRELATION

FEATURE
VALUE

t

CORRELATION
VALUE

CORRELATION VALUE
IS LARGE

t

CANDIDATE SECTION

# FIG. 13

```
                    ┌─────────────┐
                    │    START    │
                    └──────┬──────┘
                           │
                           ▼
        ┌──────────────────────────────────────┐
        │ ACQUIRE STORED FEATURE VALUE F(t)     │ ～ S61
        └──────────────────┬───────────────────┘
                           │
                           ▼
        ┌──────────────────────────────────────┐
        │ CALCULATE AUTOCORRELATION OF FEATURE  │ ～ S62
        │ VALUES IN CANDIDATE SECTION           │
        └──────────────────┬───────────────────┘
                           │
                           ▼
        ┌──────────────────────────────────────┐
        │ DETERMINE PRESENCE OF REPETITION IF   │
        │ CORRELATION VALUE EQUAL TO OR         │ ～ S63
        │ LARGER THAN THRESHOLD EXISTS          │
        └──────────────────┬───────────────────┘
                           │
                           ▼
                    ┌─────────────┐
                    │     END     │
                    └─────────────┘
```

# FIG. 14

# FIG. 15

Europäisches
Patentamt

European
Patent Office

Office européen
des brevets

## EUROPEAN SEARCH REPORT

Application Number

EP 14 15 7939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/088626 A1 (TECHNICOLOR CHINA TECHNOLOGY CO LTD [CN]; ZHOU JIE [CN]; CHENG PU [CN]) 5 July 2012 (2012-07-05) <br> * abstract; figures 1-3 * <br> * claims 1,12-22 * <br> * page 3, line 16 - page 4, line 12 * <br> * page 1, line 12 - line 15 * <br> ----- | 1-15 | INV. <br> G06F3/01 |
| X | WO 2011/057287 A1 (INVENSENSE INC [US]; NASIRI STEVE [US]; SACHS DAVID [US]; CASTRO ALEX) 12 May 2011 (2011-05-12) <br> * abstract; figures 1,3 * <br> * paragraphs [0045] - [0058], [0073] * <br> * claim 1 * <br> ----- | 1-15 | |
| A | US 2009/085864 A1 (KUTLIROFF GERSHOM [IL] ET AL) 2 April 2009 (2009-04-02) <br> * abstract; figures 1-5 * <br> * paragraphs [0019], [0028] * <br> ----- | 1-15 | |

| | |
|---|---|
| | TECHNICAL FIELDS SEARCHED (IPC) |
| | G06F |

The present search report has been drawn up for all claims

| Place of search | Date of completion of the search | Examiner |
|---|---|---|
| Munich | 2 July 2014 | Pfaffelhuber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 15 7939

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2014

| Patent document cited in search report | | Publication date | Patent family member(s) | | Publication date |
|---|---|---|---|---|---|
| WO 2012088626 | A1 | 05-07-2012 | CN | 103415825 A | 27-11-2013 |
| | | | EP | 2659335 A1 | 06-11-2013 |
| | | | KR | 20130141657 A | 26-12-2013 |
| | | | US | 2013294651 A1 | 07-11-2013 |
| | | | WO | 2012088626 A1 | 05-07-2012 |
| WO 2011057287 | A1 | 12-05-2011 | CN | 102725712 A | 10-10-2012 |
| | | | EP | 2499552 A1 | 19-09-2012 |
| | | | JP | 2013510381 A | 21-03-2013 |
| | | | TW | 201140386 A | 16-11-2011 |
| | | | WO | 2011057287 A1 | 12-05-2011 |
| US 2009085864 | A1 | 02-04-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011209773 A

**Non-patent literature cited in the description**

- **YING-HAO WANG ; YEN-TE SHIH ; K.-C.CHENG ; CHIH-JUI LIN ; TZUU-HSENG S.LI.** Real-time image processing of human face identification for home service robot. *Proc. of IEEE/SICE Int. Symp. On System Integration,* 2011, 1171-1176

- **R.M. HARALICK ; L. SHAPIRO.** Computer and robot vision. Addison-Wesley, 1992, 28-48